# EUROPEAN PATENT APPLICATION

(11) **EP 4 749 409 A1**
(43) Date of publication of application: **27.05.2026**
(21) Application number: 24843161.1
(22) Date of filing: 18.07.2024
(51) Int. Cl.: G06F 3/0346, G06F 3/01

(54) **RING-TYPE CONTROLLER AND WIRELESS COMMUNICATION SYSTEM**

(30) Priority: 18.07.2023 JP 2023117148
(71) Applicant: TDK Corporation, Tokyo 103-6128 (JP)
(72) Inventor: SETONO, Shingo, Tokyo 103-6128 (JP)
(74) Representative: Epping - Hermann - Fischer
(86) International application number: PCT/JP2024/025738
(87) International publication number: WO 2025/018372

(57) **Abstract**

A ring-type controller includes a first ring device including a first ring portion and a first proximity sensor provided in the first ring portion and a second ring device including a second ring portion and a second proximity sensor provided in the second ring portion and maintained in the first ring device to be movable with respect to the first ring device. The first proximity sensor is located at a position at which the distance between a predetermined first finger to which the first ring portion and the second ring portion are fitted and another second finger is able to be detected. The second proximity sensor is located at a position at which the distance between the first finger to which the first ring portion and the second ring portion are fitted and another third finger is able to be detected.

## Description

### TECHNICAL FIELD

The present disclosure relates to a ring-type controller and a wireless communication system.

### BACKGROUND ART

Conventionally, as controllers for operating electronic devices, controllers that can be carried by a human or controllers that are worn on a human body in use are known.

In particular, since controllers that are worn on the human body need to be miniaturized, the operations that can be performed are limited.

A smart ring described in Patent Document 1 measures the bending or extending of a finger using a bending sensor (see Patent Document 1).

### Citation List

### Patent Document

Patent Document 1: Published Japanese Translation No. 2017-527922 of the PCT International Publication

### SUMMARY OF INVENTION

### Technical Problem

However, in the conventional technology described above, for example, when a human operates an electronic device by pointing a finger in a space such as AR (Augmented Reality) glasses, the human needs to bend and extend his or her finger. As a result, there is a problem in that the operation becomes complicated.

The present disclosure has been made in view of such circumstances and an object thereof is to provide a ring-type controller and a wireless communication system capable of simplifying a user's operation.

### Solution to Problem

According to an aspect, there is provided a ring-type controller including a first ring device including a first ring portion and a first proximity sensor provided in the first ring portion and a second ring device including a second ring portion and a second proximity sensor provided in the second ring portion and maintained in the first ring device to be movable with respect to the first ring device, wherein the first proximity sensor is located at a position at which the distance between a predetermined first finger to which the first ring portion and the second ring portion are fitted and another second finger is able to be detected, and the second proximity sensor is located at a position at which the distance between the first finger to which the first ring portion and the second ring portion are fitted and another third finger is able to be detected.

According to an aspect, there is provided a wireless communication system including the ring-type controller and a host computer configured to communicate using the wireless module.

### Advantageous Effects of Invention

According to the present disclosure, it is possible to simplify a user's operation in the ring-type controller and the wireless communication system.

### BRIEF DESCRIPTION OF DRAWINGS

[FIG. 1] A diagram showing the schematic configuration of a ring-type controller according to an embodiment.
[FIG. 2A] A diagram showing an example configuration of a movable portion of the ring-type controller according to the embodiment.
[FIG. 2B] A diagram showing an example configuration of the movable portion of the ring-type controller according to the embodiment.
[FIG. 3] A diagram showing an example configuration of a wireless communication system and an example configuration of a functional block of a control circuit of the ring-type controller according to the embodiment
[FIG. 4A] A diagram schematically showing a method of wearing the ring-type controller according to an embodiment on a left hand.
[FIG. 4B] A diagram schematically showing a method of wearing the ring-type controller according to an embodiment on a left hand.
[FIG. 5A] A diagram schematically showing a method of wearing the ring-type controller according to an embodiment on a right hand.
[FIG. 5B] A sectional view schematically showing a method of wearing the ring-type controller according to an embodiment on a right hand.
[FIG. 6A] A diagram showing an example of a posture of a left hand wearing the ring-type controller according to the embodiment.
[FIG. 6B] A diagram showing an example of a posture of a left hand wearing the ring-type controller according to the embodiment.
[FIG. 6C] A diagram showing an example of a posture of a left hand wearing the ring-type controller according to the embodiment.
[FIG. 6D] A diagram showing an example of a posture of a left hand wearing the ring-type controller according to the embodiment.
[FIG. 7] A diagram showing a use example of the ring-type controller according to the embodiment.
[FIG. 8] A diagram schematically showing the configuration of a ring-type controller according to a second embodiment.

### DESCRIPTION OF EMBODIMENTS

Hereinafter, embodiments of the present disclosure will be described with reference to the accompanying drawings.

### (First embodiment)

### [Ring-type controller]

### <Appearance of ring-type controller>

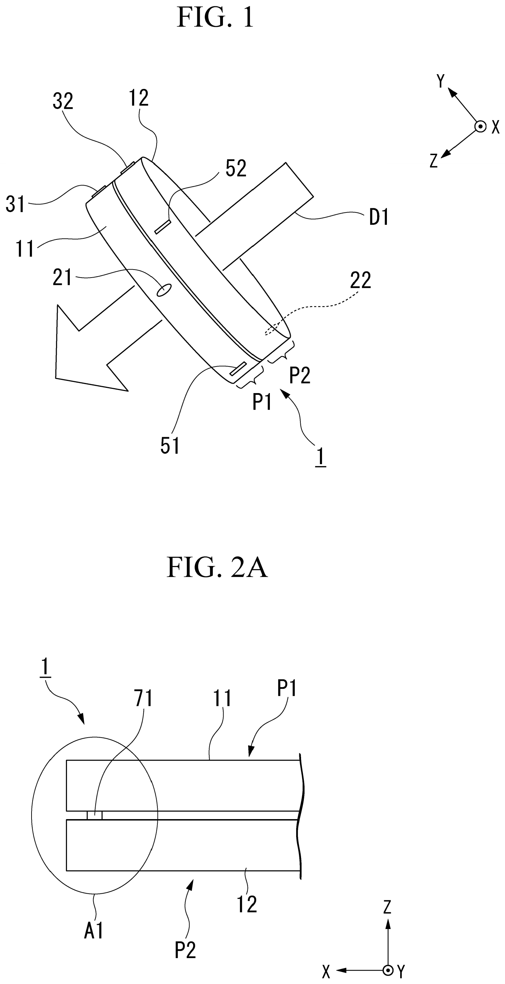

FIG. 1 is a diagram showing the schematic configuration of a ring-type controller 1 according to an embodiment. For convenience of description, FIG. 1 shows XYZ orthogonal coordinate axes, which are three-dimensional orthogonal coordinate axes. The ring-type controller 1 includes two ring portions 11 and 12, two proximity sensors 21 and 22, and four positioning portions 31, 32, 51, and 52.

In the present embodiment, one proximity sensor 21 and two positioning portions 31 and 51 are provided in the ring portion 11, thereby constituting a first ring device P1.

In the present embodiment, one proximity sensor 22 and two positioning portions 32 and 52 are provided in the ring portion 12, thereby constituting a second ring device P2.

The first ring device P1 and the second ring device P2 are combined to constitute the ring-type controller 1.

In the present embodiment, the ring-type controller 1 has a double ring structure. The ring-type controller 1 may be referred to as, for example, a ring device or the like.

Further, the ring portion may be simply referred to as, for example, a ring or the like.

Further, the names of the other components in this embodiment are also examples for the purpose of description, and may be referred by any other names.

The ring portion 11 has a ring shape.

Here, the ring shape of the ring portion 11 is not particularly limited and may be, for example, a shape such as a circular shape or an elliptical shape.

In the present embodiment, the ring portion 11 has a circular shape when it is projected onto the XY plane. The ring portion 11 has a hole portion penetrating the central portion of the circular shape in parallel to the Z axis.

In the present embodiment, the ring portion 11 is, for example, a portion with a one-step configuration.

The ring portion 12 has a ring shape.

Here, the ring shape of the ring portion 12 is not particularly limited and may be, for example, a shape such as a circular shape or an elliptical shape.

In the present embodiment, the ring portion 12 has a circular shape when it is projected onto the XY plane. The ring portion 12 has a hole portion penetrating the central portion of the circular shape in parallel to the Z axis.

In the present embodiment, the ring portion 12 is, for example, a portion with a one-step configuration.

In the present embodiment, the circular shape (for example, an inner circumference of a circle) may be same shape in two ring portions 11 and 12.

The two ring portions 11 and 12 are combined such that the circular shapes thereof match. That is, in the ring-type controller 1, the circular shape is common to the ring portion 11 and the ring portion 12, and a user feels as if one circular shape (a double ring) is present.

One proximity sensor 21 is disposed on an outer side surface of the ring portion 11.

The other proximity sensor 22 is disposed on an outer side surface of the ring portion 12.

These two proximity sensors 21 and 22 are disposed with a predetermined interval therebetween on the outer side surfaces of the ring portions 11 and 12. The predetermined interval may be represented, for example, as a rotation angle when the ring portions 11 and 12 rotate about the center axis of the circular shape or as a distance on the outer side surfaces of the ring portions 11 and 12.

The positioning portion 31 and the positioning portion 51 are disposed on the outer side surface of the ring portion 11.

The positioning portion 31 and the positioning portion 51 are disposed with a predetermined interval from the proximity sensor 21 on the outer side surface.

The positioning portion 32 and the positioning portion 52 are disposed on the outer side surface of the ring portion 12.

The positioning portion 32 and the positioning portion 52 are disposed with a predetermined interval from the proximity sensor 22 on the outer side surface.

Here, a shape of each of the positioning portions 31, 32, 51, and 52 is not particularly limited and may be, for example, a protruding shape such as a cubic or a sphere or a shape of an arbitrary decoration. The decoration may be, for example, a character, a numeral, or a symbol or may be an arbitrary pattern.

The shape of each of the positioning portions 31, 32, 51, and 52 may be, for example, a protruding shape from the outer side surface of the ring portions 11 and 12 or may be a shape engraved on the outer side surface of the ring portions 11 and 12.

In the present embodiment, the positioning portions 31, 32, 51, and 52 show a user (a human) a fitting position of a finger (an index finger in the present embodiment) to which the ring-type controller 1 is fitted.

That is, in the present embodiment, a user wears the ring-type controller 1 on a predetermined finger of a predetermined hand of the user such that the positioning portions 31, 32, 51, and 52 are located at predetermined locations when the ring-type controller 1 is worn on the predetermined finger of the predetermined hand of the user. The user may wear the ring-type controller 1 with reference to only some of the four positioning portions 31, 32, 51, and 52.

In the example shown in FIG. 1, the ring-type controller 1 is fitted to an index finger of a left hand of the user.

In FIG. 1, a direction D1 in which the index finger of the left hand is inserted into the ring portions 11 and 12 is shown.

In the example shown in FIG. 1, the ring-type controller 1 is fitted to the index finger such that the positioning portions 31 and 32 are disposed on the upper side of the index finger when the ring-type controller 1 is fitted to the index finger of the left hand of the user.

In this case, the proximity sensor 21 detects the proximity to a middle finger of the left hand of the user.

The proximity sensor 22 detects the proximity to a thumb of the left hand of the user.

Here, a position which is determined by the positioning portions 31 and 32 is not particularly limited, may not be on the upper side of the finger to which the ring-type controller 1 is fitted, and may be, for example, on the lower side or a lateral side of the finger to which the ring-type controller 1 is fitted.

### <Movable portion of ring-type controller>

FIG. 2A is a diagram showing an example configuration of a movable portion B1 of the ring-type controller 1 according to the embodiment.

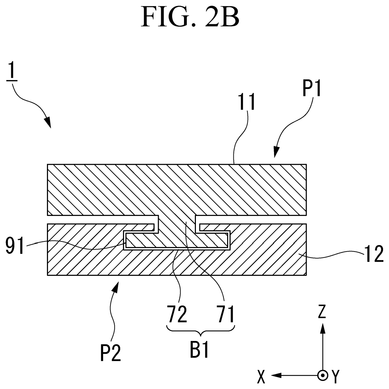

FIG. 2B is a sectional view showing an example configuration of the movable portion B1 of the ring-type controller 1 according to the embodiment.

In FIGS. 2A and 2B, the same XYZ orthogonal coordinate axes as in FIG. 1 are shown.

Appearance of a portion of the ring-type controller 1 is shown in FIG. 2A.

In the example shown in FIG. 2, a configuration when the outer side surface (a part of the outer side surface in the example shown in FIG. 2) of the ring-type controller 1 is seen is shown as an example configuration in the vicinity of a circular-shaped surface in which the ring portion 11 and the ring portion 12 are combined.

A sectional view of an area A1 shown in FIG. 2A is shown in FIG. 2B.

In the present embodiment, one ring portion 11 includes a protruding portion 71 on the side facing the circumferential shape of the other ring portion 12 over one circumference of the circular shape. The protruding portion 71 includes a broad engagement portion 91 on the other ring portion 12 side with respect to the one ring portion 11.

The other ring portion 12 includes a hole portion 72 fitted to the engagement portion 91 over one circumference of the circular shape.

The engagement portion 91 of the one ring portion 11 is fitted to the hole portion 72 of the other ring portion 12, and these two ring portions 11 and 12 are configured to rotate relative to each other about the center axis of the circular shape.

In the present embodiment, the movable portion B1 is constituted by the protruding portion 71 and the hole portion 72.

In this way, in the present embodiment, the inner circumference of the first ring device P1 (the inner circumference of the ring portion 11) and the inner circumference of the second ring device P2 (the inner circumference of the ring portion 12) have the same shape.

The two inner circumferences are maintained to overlap each other in the direction in which a predetermined finger is inserted into the first ring device P1 and the second ring device P2.

In the present embodiment, when the two ring portions 11 and 12 rotate relative to each other, a relative positional relationship between the arrangement of the proximity sensor 21 and the positioning portions 31 and 51 provided in the one ring portion 11 and the arrangement of the proximity sensor 22 and the positioning portions 32 and 52 provided in the other ring portion 12 can change.

A user can change the relative positional relationship between the two ring portions 11 and 12.

Here, an arbitrary mechanism may be used as a mechanism capable of changing the relative positional relationship between the two ring portions 11 and 12 (a relative rotation angle between the two ring portions 11 and 12 in the present embodiment).

In the present embodiment, when no force is applied to the ring portions 11 and 12 by a user or the like, it is assumed that there is a frictional force between the two ring portions 11 and 12 such that the positional relationship between the ring portions 11 and 12 does not change.

In another example of the configuration, a fastener (for example, a hook) for fixing the positional relationship between the two ring portions 11 and 12 may be provided in the ring-type controller 1. In this case, a user unfastens the fastener to change the positional relationship of the two ring portions 11 and 12 to a desired positional relationship and then fixes the two ring portions 11 and 12 using the fastener.

### <Control circuit>

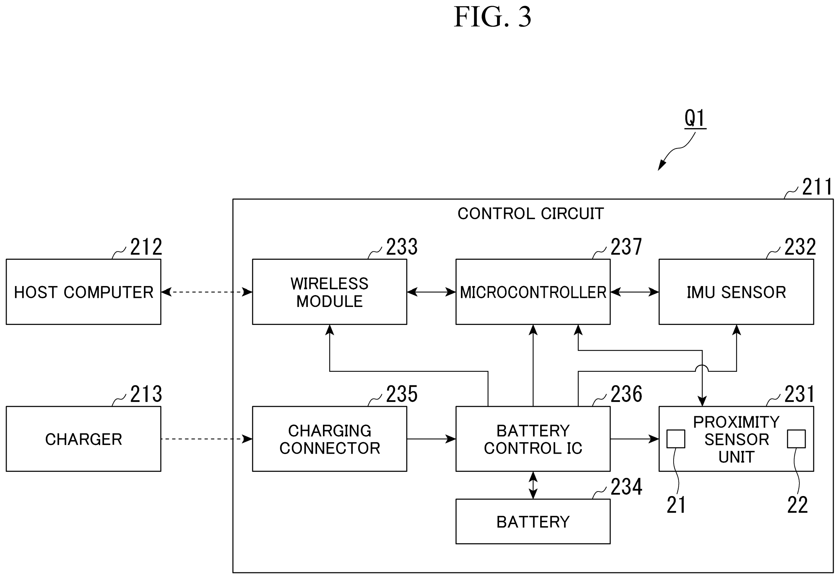

FIG. 3 is a diagram showing an example configuration of a wireless communication system Q1 and an example configuration of a functional block of a control circuit 211 of the ring-type controller 1 according to the embodiment.

The wireless communication system Q1 includes the ring-type controller 1, a host computer 212, and a charger 213.

In this embodiment, the host computer 212 and the charger 213 are external devices of the ring-type controller 1.

The control circuit 211 is provided in the ring-type controller 1.

Furthermore, for example, the charger 213 may be considered not to be included in the wireless communication system Q1.

In this embodiment, the ring-type controller 1 transmits, for example, various instructions and various information to the host computer 212 by wirelessly communicating with the host computer 212.

The host computer 212 acquires various instructions or various information on the basis of the information received from the ring-type controller 1.

The charger 213 supplies power to the ring-type controller 1.

Here, the host computer 212 may be any device, such as a personal computer (PC), a smartphone, AR glasses, or VR (Virtual Reality) glasses.

Further, various types of charger 213 may be used.

The control circuit 211 includes a proximity sensor unit 231, an IMU (Inertial Measurement Unit) sensor 232, a wireless module 233, a battery 234, a charging connector 235, a battery control IC (Integrated Circuit) 236, and a microcontroller (also referred to as a microcomputer in this embodiment for convenience of description) 237.

In this embodiment, the proximity sensor unit 231 includes a proximity sensor 21 and a proximity sensor 22.

Each of the proximity sensors 21 and 22 of the proximity sensor unit 231 functions as a distance measurement sensor.

The proximity sensor 21 detects information regarding the degree of proximity to a predetermined finger. The degree may be, for example, information indicating the distance to the finger.

The proximity sensor 22 detects information regarding the degree of proximity to a predetermined finger. The degree may be, for example, information indicating the distance to the finger.

The proximity sensor unit 231 transmits information regarding the detection result of the proximity sensor 21 (detection information) and information regarding the detection result of the proximity sensor 22 (detection information) to the microcomputer 237.

The proximity sensor unit 231 is controlled by the microcomputer 237.

Furthermore, the detection may also be referred to as, for example, gauging or measurement. Further, the detection information may be referred to as, for example, gauging information or measurement information. Further, the detection information may be also referred to as, for example, a detection value, a gauging value, or a measurement value.

Further, various information may be referred to as, for example, data.

The IMU sensor 232 includes, for example, an acceleration sensor and a gyro sensor. The IMU sensor 232 detects information according to the movement of the hand wearing the ring-type controller 1.

The IMU sensor 232 transmits information regarding the detection result (detection information) to the microcomputer 237.

The IMU sensor 232 is controlled by the microcomputer 237.

Furthermore, the IMU sensor 232 may include, for example, any one of the acceleration sensor and the gyro sensor.

The wireless module 233 wirelessly communicates with the host computer 212.

The wireless communication method is not particularly limited, and may be, for example, Bluetooth (registered trademark).

The wireless module 233 is controlled for transmission and reception by the microcomputer 237.

The battery 234 is, for example, a secondary battery, and is capable of charging and supplying power.

Here, the battery 234 may be configured to be detachable from the main body of the ring-type controller 1 (in the example of FIG. 3, the part of the ring-type controller 1 other than the battery 234), or may be integrated not to be detachable.

Furthermore, a replaceable primary battery may be used as the battery 234. In this case, the charger 213 and the charging connector 235 may not be provided. In this case, for example, the battery 234 may be considered to be an external component of the ring-type controller 1.

The charging connector 235 receives power supplied from the charger 213 and supplies the power to a battery control IC 236.

Furthermore, the charging connector 235 and the charger 213 may be configured to supply power contactlessly, or may be configured to supply power via a wire, for example. When power is supplied via a wire between the charging connector 235 and the charger 213, power may be supplied, for example, when the ring-type controller 1 is not being worn by the user.

The battery control IC 236 controls charging of the battery 234 and power supply from the battery 234.

In this embodiment, the battery control IC 236 uses the power charged in the battery 234 to supply power to each of the proximity sensor unit 231, the IMU sensor 232, the wireless module 233, and the microcomputer 237.

Further, the battery control IC 236 charges the battery 234 using power supplied from the charging connector 235.

The microcomputer 237 performs various processes and controls.

The microcomputer 237 communicates information with the host computer 212 via the wireless module 233.

The microcomputer 237 receives information regarding the detection result (detection information) from the proximity sensor unit 231.

The microcomputer 237 receives information regarding the detection result (detection information) from the IMU sensor 232.

The microcomputer 237 transmits an instruction to the host computer 212 according to the user's operation content, for example, on the basis of one or both of the information from the proximity sensor unit 231 and the information from the IMU sensor 232.

Here, the microcontroller 237 may, for example, determine an instruction corresponding to the user's operation on the basis of both information from the proximity sensor unit 231 and information from the IMU sensor 232, or may determine an instruction corresponding to the user's operation on the basis of any one of the information from the proximity sensor unit 231 and information from the IMU sensor 232.

Further, as another example, the microcomputer 237 may transmit one or both of the information from the proximity sensor unit 231 and the information from the IMU sensor 232 to the host computer 212 without specifying an instruction according to the user's operation. In this case, the host computer 212 identifies an instruction corresponding to the user's operation on the basis of the information received from the microcomputer 237.

Furthermore, when a series of processes are performed by the microcomputer 237 and the host computer 212, the processes performed by the microcomputer 237 and the processes performed by the host computer 212 may be divided arbitrarily.

As an example, the microcomputer 237 may transmit to the host computer 212 information on the detection results (for example, distance) of the proximity sensors 21 and 22, or information on the presence or absence of proximity acquired from the detection results.

Further, as an example, the microcomputer 237 may transmit to the host computer 212 information on the detection results (for example, one or both of acceleration and angular velocity) from the IMU sensor 232, or information on the movement obtained from the detection results (for example, information such as the distance moved by the ring-type controller 1).

As another example, the microcomputer 237 may generate predetermined information on the basis of the detection results of the proximity sensor unit 231 and the IMU sensor 232 and transmit the information to the host computer 212.

For example, the predetermined information may be information for display, in which case the host computer 212 displays the information received from the microcomputer 237 via the wireless module 233 on the screen.

The microcomputer 237 or the host computer 212 may determine whether or not a predetermined finger is close to the proximity sensor 21 on the basis of, for example, detection information from the proximity sensor 21. In this case, for example, the detection information is information on the distance (separation distance) from the finger, and may be determined that the finger is in close proximity if the distance from the finger is equal to or smaller than a predetermined threshold (or is smaller than the predetermined threshold), and that the finger is not in close proximity in other cases.

Similarly, the microcomputer 237 or the host computer 212 may determine whether or not a predetermined finger is close to the proximity sensor 22 on the basis of, for example, detection information from the proximity sensor 22. In this case, for example, the detection information is information on the distance (separation distance) from the finger, and may be determined that the finger is in close proximity if the distance from the finger is equal to or smaller than a predetermined threshold (or is smaller than the predetermined threshold), and that the finger is not in close proximity in other cases.

Furthermore, the threshold values of the proximity sensors 21 and 22 may be the same or different, for example.

In the present embodiment, the proximity sensor 21 and the proximity sensor 22 are disposed, for example, at separated different locations (positions) in the ring portions 11 and 12 for use.

The constituents other than the proximity sensors 21 and 22 of the ring-type controller 1 shown in FIG. 3 may be collectively disposed, for example, at one location of the ring portion 11 or the ring portion 12 or may be separately disposed at a plurality of locations of the ring portion 11 and the ring portion 12. When these constituents are collectively disposed at one location of the ring portion 11 or the ring portion 12, for example, that location may be the same location as one of the two proximity sensor 21 and 22 or may be a location different from the two proximity sensors 21 and 22.

### <Control of control circuit from host computer>

A configuration in which a predetermined instruction (control data) is transmitted from the host computer 212 to the microcomputer 237 of the control circuit 211 may be used.

The instruction may be an instruction to sleep. For example, a sleep instruction may be given from the host computer 212 to the microcomputer 237 via the wireless module 233 at a desired timing. In this case, upon receiving the instruction, the microcomputer 237 puts all or part of the control circuit 211 into a sleep state.

Furthermore, in the sleep state, for example, power consumption is reduced. In this case, the sleep state may be called a power saving state.

### [User's operation contents]

### <Wearing method on left hand>

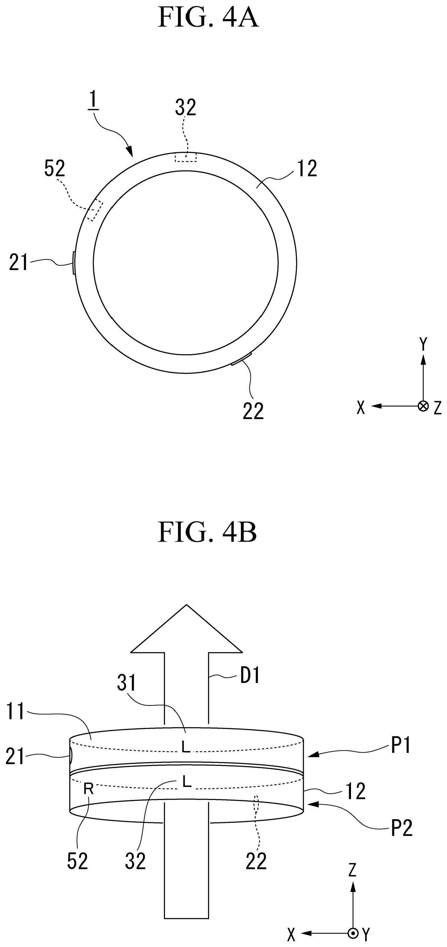

FIGS. 4A and 4B are diagrams schematically showing a method of wearing the ring-type controller 1 according to the embodiment on a left hand. The example shown in FIG. 4A and the example shown in FIG. 4B are different in viewpoint.

In FIGS. 4A and 4B, the same XYZ orthogonal coordinate axes as in FIG. 1 are shown for the purpose of convenience of explanation.

FIG. 4A shows the ring-type controller 1 from a viewpoint at which the hole portion of the ring portions 11 and 12 of the ring-type controller 1 is seen.

FIG. 4B shows the ring-type controller 1 from a viewpoint at which the vicinity of the outer circumference of the ring portion 11 of the ring-type controller 1 is seen.

In the example shown in FIG. 4B, for the purpose of convenience of explanation, "L" is marked at the location of the positioning portion 31 of the ring portion 11 and at the location of the positioning part 32 of the ring portion 12.

In the example shown in FIG. 4B, for the purpose of convenience of explanation, "R" is marked at the location of the positioning part 52 of the ring portion 12. In the example shown in FIG. 4B, "R" at the location of the positioning portion 51 of the ring portion 11 is not visible and thus is not shown.

In the present embodiment, the ring-type controller 1 is worn on a user's left hand for use in a state in which the positional relationship between the two ring portions 11 and 12 has been adjusted such that the location of the positioning portion 31 of the ring portion 11 and the location of the positioning part 32 of the ring portion 12 marked with "L" are disposed at the same position on the circumferences of the two ring portions 11 and 12 (at the same position in rotation angle when they rotate about the center axis of the circular shape).

In FIG. 4B, a direction D1 in which a finger of a user's left hand is inserted is shown.

In the example shown in FIG. 4A, when an index finger of the user's left hand is inserted from the shallow side to the deep side of the drawing surface of FIG. 4A, the ring-type controller 1 is worn on the index finger.

In this case, the proximity sensor 21 is disposed at a position at which it can be detected whether a middle finger of the user's left hand is close to the index finger.

The proximity sensor 22 is disposed at a position at which it can be detected whether a thumb of the user's left hand is close to the index finger.

Accordingly, the microcomputer 237 or the host computer 212 can identify an instruction corresponding to the user's operation contents on the basis of the detection results from the two proximity sensors 21 and 22.

### <Wearing method on right hand>

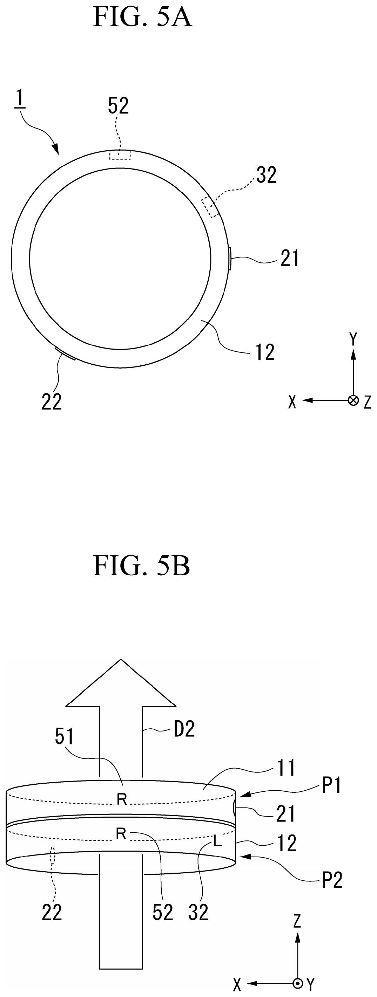

FIGS. 5A and 5B are diagrams schematically showing a method of wearing the ring-type controller 1 according to the embodiment on a right hand. The example shown in FIG. 5A and the example shown in FIG. 5B are different in viewpoint.

In FIGS. 5A and 5B, the same XYZ orthogonal coordinate axes as in FIG. 1 are shown for the purpose of convenience of explanation.

FIG. 5A shows the ring-type controller 1 from a viewpoint at which the hole portion of the ring portions 11 and 12 of the ring-type controller 1 is seen.

FIG. 5B shows the ring-type controller 1 from a viewpoint at which the vicinity of the outer circumference of the ring portion 11 of the ring-type controller 1 is seen.

In the example shown in FIG. 5B, for the purpose of convenience of explanation, "L" is marked at the location of the positioning part 32 of the ring portion 12. In the example shown in FIG. 5B, "L" at the location of the positioning portion 31 of the ring portion 11 is not visible and thus is not shown.

In the example shown in FIG. 5B, for the purpose of convenience of explanation, "R" is marked at the location of the positioning portion 51 of the ring portion 11 and at the location of the positioning portion 52 of the ring portion 12.

In the present embodiment, the ring-type controller 1 is worn on a user's right hand for use in a state in which the positional relationship between the two ring portions 11 and 12 has been adjusted such that the location of the positioning portion 51 of the ring portion 11 and the location of the positioning part 52 of the ring portion 12 marked with "R" are disposed at the same position on the circumferences of the two ring portions 11 and 12 (at the same position in rotation angle when they rotate about the center axis of the circular shape).

In FIG. 5B, a direction D2 in which a finger of a user's right hand is inserted is shown.

In the example shown in FIG. 5A, when an index finger of the user's right hand is inserted from the shallow side to the deep side of the drawing surface of FIG. 5A, the ring-type controller 1 is worn on the index finger.

In this case, the proximity sensor 21 is disposed at a position at which it can be detected whether a middle finger of the user's right hand is close to the index finger.

The proximity sensor 22 is disposed at a position at which it can be detected whether a thumb of the user's right hand is close to the index finger.

Accordingly, the microcomputer 237 or the host computer 212 can identify an instruction corresponding to the user's operation contents on the basis of the detection results from the two proximity sensors 21 and 22.

In the present embodiment, the position of the positioning portion 31 and the position of the positioning portion 51 are different by 180 degrees (or about 180 degrees) at the rotation angle when the ring portion 11 rotates about the center axis of the circular shape thereof.

In the present embodiment, the position of the positioning portion 32 and the position of the positioning portion 52 are different by an angle in a range of about 45 degrees to 90 degrees (for example, 45 degrees or 90 degrees) at the rotation angle when the ring portion 12 rotates about the center axis of the circular shape thereof.

In the present embodiment, in the example shown in FIG. 4B, the proximity sensor 21 is disposed at a position in the middle (or on the middle side) of the circumference on the left side (the left in FIG. 4B) connecting the positioning portion 31 and the positioning portion 51 in the ring portion 11 from a viewpoint at which it is seen from the minus side to the plus side of the Z axis. That is, in the present embodiment, the position of the positioning portion 31 and the position of the proximity sensor 21 are different by 90 degrees (or about 90 degrees) at the rotation angle when the ring portion **11** rotates about the center axis of the circular shape thereof, and the position of the proximity sensor 21 and the position of the positioning portion 51 are similarly different by 90 degrees (or about 90 degrees).

In the present embodiment, in the example shown in FIG. 4B, the proximity sensor 22 is disposed at a position of about 90 degrees to 180 degrees (for example, 157.5 degrees or 135 degrees) of the circumference on the right side (the right in FIG. 4B) connecting the positioning portion 32 and the positioning portion 52 in the ring portion 12 from a viewpoint at which it is seen from the minus side to the plus side of the Z axis. That is, in the present embodiment, the position of the positioning portion 32 and the position of the proximity sensor 22 are different by about 90 degrees to 180 degrees at the rotation angle when the ring portion 12 rotates about the center axis of the circular shape thereof.

In this way, in the present embodiment, the position of the proximity sensor 21 and the position of the proximity sensor 22 are different by an angle in a range of about 90 degrees to 180 degrees (for example, 112.5 degrees or 135 degrees) at the rotation angle when the ring portions **11** and 12 rotate about the center axis of the circular shape thereof.

The arrangement (for example, a position in rotation angle) of the constituents described in the present embodiment is exemplary for explanation and is not a strict value, and arbitrary arrangement effective for practical use may be used as the arrangement of the constituents.

### <Example of user's operation content>

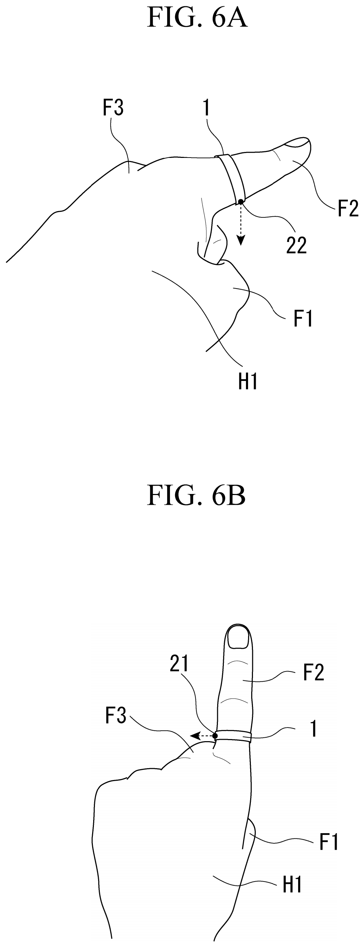

Referring to FIGS. 6A to 6D, an example of a user operation content is shown.

In the examples of FIGS. 6A to 6D, the ring-type controller 1 is worn on the index finger F2 of the user's left hand H1.

FIGS. 6A and 6B are diagrams showing an example of the posture of the left hand H1 wearing the ring-type controller 1 according to the embodiment.

FIGS. 6A and 6B are diagrams showing the same posture of the left hand H1 as viewed from different viewpoints.

In the example of FIG. 6A, the user is in a pointing posture with only the index finger F2 of the left hand H1 extended.

In this case, it is determined that the middle finger F3 of the user's left hand H1 is not close to the index finger F2 on the basis of the detection result of the proximity sensor 21, and it is determined that the thumb F1 of the user's left hand H1 is not close to the index finger F2 on the basis of the detection result of the proximity sensor 22.

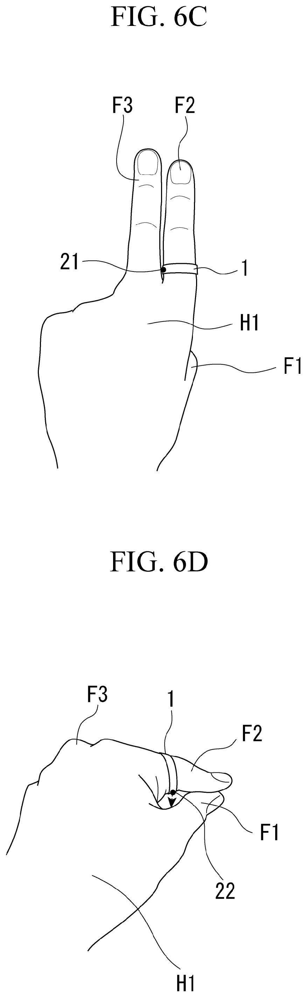

FIG. 6C is a diagram showing an example of the posture of the left hand H1 wearing the ring-type controller 1 according to this embodiment.

In the example of FIG. 6C, the user extends the index finger F2 and the middle finger F3 of the left hand H1 in a pointing posture with two fingers.

In this case, it is determined that the middle finger F3 of the user's left hand H1 is close to the index finger F2 on the basis of the detection result of the proximity sensor 21, and it is determined that the thumb F1 of the user's left hand H1 is not close to the index finger F2 on the basis of the detection result of the proximity sensor 22.

FIG. 6D is a diagram showing an example of the posture of the left hand H1 wearing the ring-type controller 1 according to the embodiment.

In the example of FIG. 6D, the user assumes a posture for performing a grasping operation such that the index finger F2 and the middle finger F3 of the left hand H1 touch and the index finger F2 and the thumb F1 extend to touch.

In this case, it is determined that the middle finger F3 of the user's left hand H1 is close to the index finger F2 on the basis of the detection result of the proximity sensor 21, and it is determined that the thumb F1 of the user's left hand H1 is close to the index finger F2 on the basis of the detection result of the proximity sensor 22.

Furthermore, the user's operation contents shown in FIGS. 6A to 6D are examples, and any posture may be used as the posture of the left hand H1 for determining the user's operation contents.

For example, the examples of FIGS. 6A to 6D show a case where the user's operation content is identified on the basis of the detection results of the proximity sensors 21 and 22 in accordance with the posture of the user's left hand H1, but as another example, the user's operation content may be identified on the basis of both the detection results of the proximity sensors 21 and 22 and the detection results of the IMU sensor 232.

### <Use example of ring-type controller>

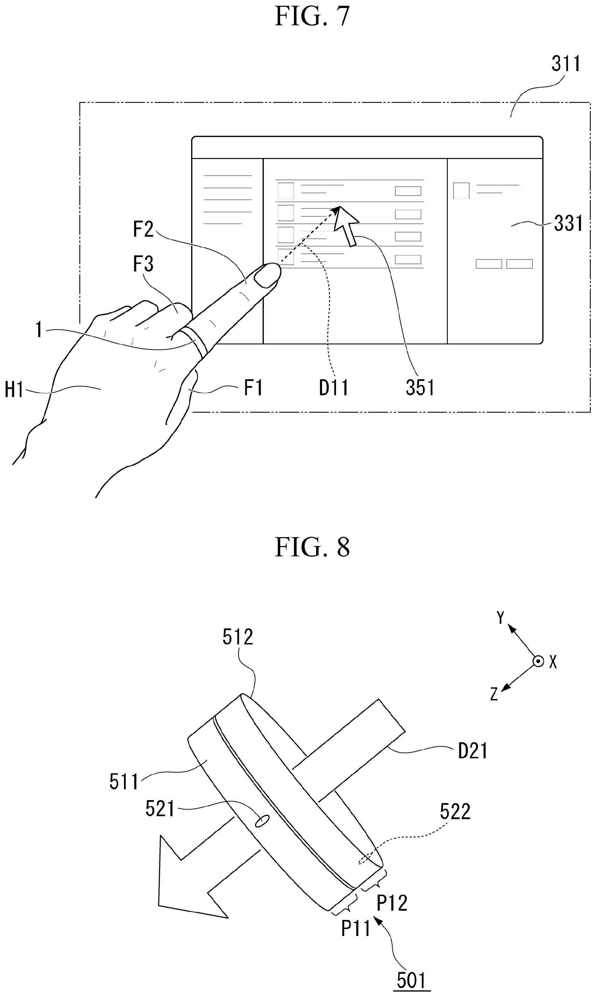

FIG. 7 is a diagram showing a use example of the ring-type controller 1 according to the embodiment.

FIG. 7 shows a screen 331 projected onto a wall 311 by the function of a projector.

The image on the screen 331 includes an image of an operation target 351.

In the example of FIG. 7, the screen 331 is a projection of the screen processed by the host computer 212. Further, in the example of FIG. 7, the operation target 351 is a cursor that can be moved on the screen 331.

Further, FIG. 7 shows the ring-type controller 1 and the user's left hand H1 wearing the ring-type controller 1. The ring-type controller 1 is worn on the index finger F2 of the left hand H1.

In the example of FIG. 7, when the user positions the left hand H1 in a predetermined posture, an instruction corresponding to that position can be sent to the host computer 212 via the ring-type controller 1. In the example of FIG. 7, the posture is a posture in which the tip of the index finger F2 is pointed in a predetermined direction D11.

The host computer 212 executes various processes on the basis of the instructions received from the ring-type controller 1 (user operations). The process is not particularly limited, and may be, for example, a process related to a target pointed by the cursor, or a process to move the cursor. The host computer 212 identifies a process corresponding to the user's operation content on the basis of the relationship (for example, relative position or the like) between the screen generated by the host computer 212 (in this example, the screen 331 displayed on the wall 311) and the user's operation content, and executes the process.

Furthermore, in this embodiment, the case where the content of the user operation is notified from the ring-type controller 1 to the host computer 212 is shown, but as another example, the content of the user operation may be identified by the microcomputer 237 of the ring-type controller 1, and the microcomputer 237 may execute a process according to the content of the operation.

Further, in this embodiment, an example is given in which a predetermined screen (the screen 331 in the example of FIG. 7) is projected onto the wall 311, but as another example, a configuration in which such a screen is projected onto one or both sides of glasses worn by the user may be used.

As described above, in the ring-type controller 1 according to this embodiment, it is possible to simplify the user (human)'s operation. For example, the user can perform intuitive operations by pointing at the space projected on the wall 311 or AR glasses.

For example, the user can operate or control an electronic device (in this embodiment, the host computer 212) by wearing the ring-type controller 1 on the fingers of the hand and positioning the hand in a predetermined posture.

The user can simplify the operation of the user interface by, for example, bringing the finger wearing the ring-type controller 1 close to another finger.

Further, the user can easily operate the user interface by, for example, bringing the finger wearing the ring-type controller 1 close to two or more other fingers.

By referring to the positioning portion 31, 32, 51 and 52, the user can visually and easily recognize how to wear the ring-type controller 1.

In the ring-type controller 1 according to this embodiment, since the information regarding the detection results of the proximity sensors 21 and 22 can be transmitted to the host computer 212, for example, the host computer 212 can accurately determine the position of a predetermined finger relative to the finger of the user wearing the ring-type controller 1 (for example, whether or not that finger is in proximity).

For example, in a configuration in which the detection result of each sensor (in this embodiment, the proximity sensors 21 and 22 and the IMU sensor 232) is transmitted from the ring-type controller 1 to the host computer 212, accurate information regarding the position of the ring-type controller 1 and the like can be presented to the host computer 212.

In the examples shown in FIGS. 6A to 6D and FIG. 7, the case in which the ring-type controller 1 is worn on a finger of a user's left hand has been exemplified, but the same is true of a case in which the ring-type controller 1 is worn on a finger of the user's right hand.

For example, when the ring-type controller 1 is worn on a finger of a user's right hand, the ring-type controller 1 may have a symmetric configuration or another configuration in comparison with the case in which the ring-type controller 1 is worn on a finger of the user's left hand.

In the present embodiment, the ring-type controller 1 which is worn on an index finger has been exemplified. For example, the ring-type controller may be worn on a finger other than the index finger. In a specific example, a configuration in which the ring-type controller 1 is worn on a middle finger of a user's predetermined hand and a degree of proximity between the middle finger and another finger is detected by a proximity sensor may be employed. In this case, the other finger may be, for example, one or more of an index finger, a ring finger, and a thumb.

Regarding the locations at which two proximity sensors 21 and 22 and the positioning portions 31, 32, 51, and 52 are provided in the ring portions 11 and 12 of the ring-type controller 1, the locations described in the present embodiment are an example, and locations at which they are provided may be arbitrarily designed.

In the present embodiment, the ring-type controller 1 in which two proximity sensors 21 and 22 are provided in the ring portions 11 and 12 has been described. In another example of the configuration, a ring-type controller in which three or more proximity sensors are provided in the ring portions may be realized. That is, in the ring-type controller, at least two proximity sensors may be provided at different locations of the ring portions.

### (Second embodiment)

### [Ring-type controller]

FIG. 8 is a diagram schematically showing the configuration of a ring-type controller 501 according to a second embodiment.

The ring-type controller 501 includes two ring portions 511 and 512 and two proximity sensors 521 and 522.

In the present embodiment, one proximity sensor 521 is provided in the ring portion 511, thereby constituting a first ring device P11.

In the present embodiment, one proximity sensor 522 is provided in the ring portion 512, thereby constituting a second ring device P12.

The first ring device P11 and the second ring device P12 are combined to constitute the ring-type controller 501.

Similarly to the first embodiment, two ring portions 511 and 512 can change a relative rotation angle therebetween and thus can change a positional relationship therebetween.

Here, the proximity sensor 521 is disposed at a predetermined location on an outer side surface of the ring portion 511.

The proximity sensor 522 is disposed at a predetermined location on an outer side surface of the ring portion 512.

For example, the two proximity sensor 521 and 522 may be disposed at the same locations as the two proximity sensors 21 and 22 according to the first embodiment.

For example, the proximity sensors 521 and 522 have the same functions as the proximity sensors 21 and 22 shown in FIG. 1.

For example, the ring-type controller 501 includes a control circuit having the same configuration as the control circuit 211 shown in FIG. 3.

The control circuit or a host computer (a device corresponding to the host computer 212 shown in FIG. 3) identify a user's operation contents on the basis of detection results from two proximity sensors 521 and 522 or the detection results from two proximity sensors 521 and 522 and a detection result of an IMU sensor (a sensor corresponding to the IMU sensor 232 shown in FIG. 3).

Here, the ring-type controller 501 according to the present embodiment is different from the ring-type controller 1 according to the first embodiment, roughly in that no positioning portions are provided.

In the present embodiment, no positioning portions are provided in the ring portion 511 and the ring portion 512, and a user wears the ring-type controller 501 on a predetermined finger, for example, with reference to positions of the proximity sensors 521 and 522 provided in the ring portion 511 and the ring portion 512 or the like.

As described above, with the ring-type controller 501 according to the present embodiment, it is possible to allow a user (a human) to simply operate a ring-type controller.

A user can realize a simple operation, for example, by performing a motion of bringing a finger wearing the ring-type controller 501 and another finger close.

A user can realize a simple operation, for example, by performing a motion of bringing a finger wearing the ring-type controller 1 and two or more other fingers close.

### [Regarding embodiments above]

Furthermore, a program for realizing the functions of any of the components in any of the above-described devices may be recorded on a computer-readable recording medium, and the program may be read into a computer system and executed. Furthermore, the term "computer system" here includes the operating system and hardware such as peripherals. Further, the "computer-readable recording medium" refers to a portable medium such as a flexible disk, optical magnetic disk, ROM, and CD (Compact Disc)-ROM (Read-Only Memory), as well as a storage device such as a hard disk built into a computer system. Furthermore, the "computer-readable recording medium" also includes those that retain a program for a certain period of time, such as volatile memory within a computer system that acts as a server or client when a program is transmitted via a network such as the Internet or a communication line such as a telephone line. The volatile memory may be, for example, a RAM (Random-Access Memory). The recording medium may be, for example, a non-transitory recording medium.

Further, the above program may be transmitted from a computer system storing the program in a storage device or the like to another computer system via a transmission medium or by a transmission wave in the transmission medium. Here, the "transmission medium" for transmitting the program refers to a medium having a function for transmitting information, such as a network such as the Internet or a communication line such as a telephone line.

Further, the above program may be for realizing a part of the above-described functions. Furthermore, the above-described program may be a so-called differential file that can realize the above-described functions in combination with a program already recorded in the computer system. The differential file may be called a differential program.

Further, the functions of any of the components in any of the above-described devices may be implemented by a processor. For example, each process in the embodiment may be realized by a processor that operates on the basis of information such as a program and a computer-readable recording medium that stores information such as the program. Here, in the processor, for example, the functions of each part may be realized by separate hardware, or the functions of each part may be realized by integrated hardware. For example, the processor may include hardware, which may include circuitry for processing digital signals and/or circuitry for processing analog signals. For example, the processor may be configured using one or more circuit devices mounted on a circuit board, or one or more circuit elements. An IC (Integrated Circuit) or the like may be used as the circuit device, and a resistor or a capacitor or the like may be used as the circuit element.

Here, the processor may be, for example, a CPU. However, the processor is not limited to a CPU, and various types of processors such as a GPU (Graphics Processing Unit) or a DSP (Digital Signal Processor) may be used. Further, the processor may also be a hardware circuit such as an ASIC (Application Specific Integrated Circuit). Further, the processor may be configured, for example, by a plurality of CPUs, or may be configured by a hardware circuit using a plurality of ASICs. Further, the processor may also be configured, for example, by a combination of multiple CPUs and a hardware circuit using multiple ASICs. Further, the processor may include, for example, one or more amplifier circuits or filter circuits for processing the analog signal.

The embodiments of this disclosure have been described in detail above with reference to the drawings, but the specific configuration is not limited to these embodiments, and includes designs within the scope that do not deviate from the gist of this disclosure.

### [Appendix]

[Configuration Example 1] to [Configuration Example 8] will be described below.

### [Configuration Example 1]

A ring-type controller including:
a first ring device including a first ring portion and a first proximity sensor provided in the first ring portion; and
a second ring device including a second ring portion and a second proximity sensor provided in the second ring portion and maintained in the first ring device to be movable with respect to the first ring device,
wherein the first proximity sensor is located at a position at which the distance between a predetermined first finger to which the first ring portion and the second ring portion are fitted and another second finger is able to be detected, and
the second proximity sensor is located at a position at which the distance between the first finger to which the first ring portion and the second ring portion are fitted and another third finger is able to be detected.

Accordingly, with the ring-type controller, a user can simply perform an operation in combination of a simple motion of bringing the first finger and the second finger close to each other and a simple motion of bringing the first finger and the third finger close to each other. It is possible to instruct various indications, for example, using a motion of bringing the finger to which the ring-type controller is fitted and another finger (for example, a thumb) close to each other, a motion of indicating a predetermined target with two fingers, or the like as a motion of a user's finger. For example, the ring-type controller can be shared by both of the left hand and the right hand.

Here, the first finger, the second finger, and the third finger may be arbitrary fingers.

The ring-type controller may be applied to one or both of the right hand and the left hand.

In the present embodiment, the ring-type controller 1 or 501 is an example of the ring-type controller, the first ring device P1 or P11 is an example of the first ring device, the second ring device P2 or P12 is an example of the second ring device, the ring portion 11 or 511 is an example of the first ring portion, the ring portion 12 or 512 is an example of the second ring portion, the proximity sensor 21 or 521 is an example of the first proximity sensor, the proximity sensor 22 or 522 is an example of the second proximity sensor, the index finger F2 of the left hand H1 or the index finger of the right hand is an example of the first ringer, the middle finger F3 of the left hand H1 or the middle finger of the right hand is an example of the second finger, and the thumb F1 of the left hand H1 or the thumb of the right hand is an example of the third finger.

### [Configuration Example 2]

The ring-type controller according to [Configuration Example 1], wherein the first ring device and the second ring device include a movable portion including a mechanism for enabling movement along an outer circumference.

Accordingly, with the ring-type controller, it is possible to adjust a relative positional relationship between the first ring device and the second ring device.

### [Configuration Example 3]

The ring-type controller according to [Configuration Example 1] or [Configuration Example 2], wherein a first inner circumference of the first ring device and a second inner circumference of the second ring device have the same shape, and
the first inner circumference and the second inner circumference are maintained to overlap each other in a direction in which the first finger is inserted into the first ring device and the second ring device.

Accordingly, with the ring-type controller, it is possible to smoothly insert the ring-type controller into a user's finger, for example, when the user fits the ring-type controller to the finger.

### [Configuration Example 4]

The ring-type controller according to any one of [Configuration Example 1] to [Configuration Example 3], wherein the second finger and the third finger are adjacent to the first finger.

Accordingly, with the ring-type controller, a user can simply perform an operation using a simple motion of bringing the first finger and the second finger which are adjacent to each other close to each other and a simple motion of bringing the first finger and the third finger which are adjacent to each other close to each other.

### [Configuration Example 5]

The ring-type controller according to [Configuration Example 4], wherein the first finger is an index finger, the second finger is a thumb, and the third finger is a middle finger.

Accordingly, with the ring-type controller, a user can simply perform an operation using a simple motion of bringing the index finger and a finger (a thumb or a middle finger) adjacent thereto close to each other.

### [Configuration Example 6]

The ring-type controller according to any one of [Configuration Example 1] to [Configuration Example 5], wherein the first ring device includes a first positioning portion and a second positioning portion indicating a fitting position to the first finger,
wherein the second ring device includes a third positioning portion and a fourth positioning portion indicating a fitting position to the first finger,
wherein a first insertion direction in which the ring-type controller is inserted to one of left and right fingers is indicated when the first positioning portion and the third positioning portion are aligned, and
wherein a second insertion direction in which the ring-type controller is inserted to the other of left and right fingers is indicated when the second positioning portion and the fourth positioning portion are aligned.

Accordingly, the ring-type controller can be fitted to both of a finger of the left hand and a finger of the right had, and it is possible to enhance fitting convenience, for example, according to a user's dominant hand. With the ring-type controller, a user can easily recognize a method of fitting the ring-type controller with reference to the positioning portions.

In the present embodiment, the positioning portion 31 of and the positioning portion 51 the ring portion 11 are examples of the first positioning portion and the second positioning portion, the positioning portion 32 and the positioning portion 52 of the ring portion 12 are examples of the third positioning portion and the fourth positioning portion, the direction D1 is an example of the first insertion direction, and the direction D2 is an example of the second insertion direction.

### [Configuration Example 7]

The ring-type controller according to any one of [Configuration Example 1] to [Configuration Example 6], further including:
a microcontroller configured to receive first distance information detected by the first proximity sensor and second distance information detected by the second proximity sensor and to receive information of a detection value detected by one or both of an acceleration sensor and a gyro sensor; and
a battery configured to supply electric power to one or more of the first proximity sensor, the second proximity sensor, the acceleration sensor and the gyro sensor, and the microcontroller.

Accordingly, with the ring-type controller, it is possible to perform processes or control on the basis of the detection results from various sensors using the microcontroller (the microcomputer) and to transmit, for example, information on the basis of the detection results from one or more sensors to an external device (for example, the host computer 212).

In the present embodiment, the IMU sensor 232 has the functions of the acceleration sensor and the gyro sensor, the microcomputer 237 is an example of the microcontroller (the microcomputer), and the battery 234 is an example of the battery.

### [Configuration Example 8]

The ring-type controller according to [Configuration Example 7], further including:
a charging connector used to charge the battery; and
a wireless module configured to transmit and receive data to and from the microcontroller.

Accordingly, with the ring-type controller, it is possible to charge the battery and to transmit and receive data, for example, to and from an external device (for example, the host computer 212).

In the present embodiment, the charging connection 235 is an example of the charging connector, and the wireless module 233 is an example of the wireless module.

### [Configuration Example 9]

A wireless communication system including:
the ring-type controller according to [Configuration Example 8]; and
a host computer configured to communicate using the wireless module.

Accordingly, with the wireless communication system, it is possible to apply operation contents corresponding to a motion of a user's hand to which the ring-type controller is fitted to various operations or control through wireless communication between the host computer and the ring-type controller.

In the present embodiment, the wireless communication system Q1 is an example of a wireless communication system.

### REFERENCE SIGNS LIST

1, 501 Ring-type controller
11, 12, 511, 512 Ring portion
21, 22, 521, 522 Proximity sensor
31, 32, 51, 52 Positioning portion
71 Protruding portion
72 Hole portion
91 Engagement portion
211 Control circuit
212 Host computer
213 Charger
231 Proximity sensor unit
232 IMU sensor
233 Wireless module
234 Battery
235 Charging connector
236 Battery control IC
237 Microcontroller (microcomputer)
311 Wall
331 Screen
351 Operation target
A1 Area
B1 Movable portion
D1, D11, D21 Direction
F1 Thumb
F2 Index finger
F3 Middle finger
H1 Left hand
P1, P11 First ring device
P2, P12 Second ring device
Q1 Wireless communication system

## Claims

1. A ring-type controller comprising:
a first ring device including a first ring portion and a first proximity sensor provided in the first ring portion; and
a second ring device including a second ring portion and a second proximity sensor provided in the second ring portion and maintained in the first ring device to be movable with respect to the first ring device,
wherein the first proximity sensor is located at a position at which a distance between a predetermined first finger to which the first ring portion and the second ring portion are fitted and another second finger is able to be detected, and
wherein the second proximity sensor is located at a position at which a distance between the first finger to which the first ring portion and the second ring portion are fitted and another third finger is able to be detected.

2. The ring-type controller according to claim 1, wherein the first ring device and the second ring device include a movable portion including a mechanism for enabling movement along an outer circumference.

3. The ring-type controller according to claim 1 or 2, wherein a first inner circumference of the first ring device and a second inner circumference of the second ring device have the same shape, and
wherein the first inner circumference and the second inner circumference are maintained to overlap each other in a direction in which the first finger is inserted into the first ring device and the second ring device.

4. The ring-type controller according to claim 1 or 2, wherein the second finger and the third finger are adjacent to the first finger.

5. The ring-type controller according to claim 4, wherein the first finger is an index finger, the second finger is a thumb, and the third finger is a middle finger.

6. The ring-type controller according to claim 1 or 2, wherein the first ring device includes a first positioning portion and a second positioning portion indicating a fitting position to the first finger,
wherein the second ring device includes a third positioning portion and a fourth positioning portion indicating a fitting position to the first finger,
wherein a first insertion direction in which the ring-type controller is inserted to one of left and right fingers is indicated when the first positioning portion and the third positioning portion are aligned, and
wherein a second insertion direction in which the ring-type controller is inserted to the other of left and right fingers is indicated when the second positioning portion and the fourth positioning portion are aligned.

7. The ring-type controller according to claim 1 or 2, further comprising:
a microcontroller configured to receive first distance information detected by the first proximity sensor and second distance information detected by the second proximity sensor and to receive information of a detection value detected by one or both of an acceleration sensor and a gyro sensor; and
a battery configured to supply electric power to one or more of the first proximity sensor, the second proximity sensor, the acceleration sensor and the gyro sensor, and the microcontroller.

8. The ring-type controller according to claim 7, further comprising:
a charging connector used to charge the battery; and
a wireless module configured to transmit and receive data to and from the microcontroller.

9. A wireless communication system comprising:
the ring-type controller according to claim 8; and
a host computer configured to communicate using the wireless module.
